# EUROPEAN PATENT SPECIFICATION

(11) **EP 2 253 952 B1**
(45) Date of publication and mention of the grant of the patent: **07.09.2011**
(21) Application number: 10162864.2
(22) Date of filing: 14.05.2010
(51) Int. Cl.: G01N 27/64, H01J 49/04

(54) **Method of inorganic analysis by mass spectrometry**
Verfahren zur anorganischen Analyse durch Massenspektrometrie
Procédé d'analyse inorganique par spectrométrie de masse

(30) Priority: 18.05.2009 US 179213 P
(43) Date of publication of application: 24.11.2010
(73) Proprietor: Jeol USA, Inc., Peabody, MA 01960-6043 (US)
(72) Inventor: Cody, Robert B., Portsmouth, NH 03801 (US)
(74) Representative: Land, Addick Adrianus Gosling

(56) References cited:
- US-A- 5 705 443
- US-A1- 2005 288 616
- US-A1- 2009 121 127
- US-B2- 7 112 785
- BLACK M S ET AL: "Volatile metal-chelate sample introduction for inductively coupled plasma-atomic emission spectrometry" ANALYTICAL CHEMISTRY, vol. 53, no. 2, February 1981 (1981-02), pages 249-253, XP002601301 ISSN: 0003-2700

## Description

### BACKGROUND OF THE INVENTION

### Field of the Invention

This invention relates to using mass spectrometry for analysis of surfaces for the presence of metals and metal compounds using atmospheric pressure ionization with metastable neutral excited-state species.

### Background of the Invention

Inorganic mass spectrometry is normally accomplished by inductively-coupled plasma mass spectrometry (ICPMS) or spark source mass spectrometry and/or laser ablation mass spectrometry. These methods are well established, but they require sample dissolution or other damaging sample preparation methods. Sample material must be removed from a surface and prepared for analysis. Other methods for elemental analysis that do not involve mass spectrometry are well known, including X-ray fluorescence and atomic emission spectroscopy. These have various strengths and weaknesses for which mass spectrometry can provide confirming information or complementary information, such as isotopic composition.

Ambient and/or open-air ion sources, such as direct analysis in real time (DART®), desorption electrospray ionization (DESI), analyte sampling at atmospheric pressure (ASAP), and numerous others have been demonstrated to be useful for analysis of organic compounds and some organometallic compounds. The speed and convenience of open-air mass spectrometry analysis with minimal sample preparation are recognized. However, they have not previously been shown to be useful for analysis of metals or other inorganic elements. It is desirable to have a convenient analytical method that is capable of determining intact organic and organometallic molecules and also determining the presence of inorganic elements. It is also desirable to be able to quickly sample material from a surface and determine its composition on the spot, or to wipe or otherwise sample a surface and analyze the sample at a later time.

A known method for detecting some metallic species comprises heating a sample with a torch and detecting metals by atmospheric pressure thermal ionization. Ions formed by thermal ionization are fragmented by collision-induced dissociation to produce elemental ions and/or their oxides and hydroxides.

High-resolution mass spectrometry is used to identify elemental ions by their exact mass-to-charge ratios which differ from the mass-to-charge ratios of interfering organic species. This method does require heating a sample to a very high temperature which causes thermal damage to the material being ionized. It is difficult or inconvenient using this method to achieve a high enough temperature to ionize some elements, such as aluminum.

Electrospray ionization can also be used to detect metals and other elemental species. However, the sample must be dissolved and analyzed in solution for this approach.

### SUMMARY OF THE INVENTION

An object of this invention is to expand the range of materials for which ambient ionization methods can be applied to include metals and other inorganic species. An advantage of this approach is that elemental species can be recognized by the same instrumentation that can also analyze intact organic or organometallic molecules. A further advantage is that surface samples can be sampled directly or, alternatively, wiped to collect material for analysis at another site.

Briefly, according to one embodiment of this invention, a surface is treated with a chelating reagent so that inorganic elements can be made volatile and desorbed directly from the surface. According to an alternate embodiment of this invention, a surface is wiped or swabbed after exposure to a chelating reagent. In this embodiment, material may be removed that can be analyzed later directly on the swab or the material can be deposited on another sampling device for further analysis. The treated surface or swab is exposed to a flow of metastable atoms and molecules at atmospheric pressure. Metastable atoms and molecules are excited-state species with long lifetimes. Metastable species are produced, for example, in corona or glow electrical discharges. Collisions between excited-state species and ground-state species can result in ionization. The ionized inorganic species are then directed into a mass spectrometer.

According to the preferred embodiment, the surface to be analyzed is treated with a mixture of water, methanol, acetyl acetone containing NaOH, and/or NH₄OH.

### BRIEF DESCRIPTION OF THE DRAWINGS

Further features and other objects and advantages will become clear from the following detailed description made with reference to the drawings in which:
Fig. 1 is the mass spectrum of the inside of an alkaline battery produced according to this invention;
Fig. 2 is the mass spectrum of the metals on the surface of a U.S. one cent coin produced according to this invention; and
Fig 3 is the mass spectrum of the surface of a lead sheet produced according to this invention by analysis of a swab.

### DESCRIPTION OF THE PREFERRED EMBODIMENTS

This invention relates to atmospheric ionization of analytes with metastable atoms and molecules and like plasmas. Metastable atoms and molecules are excited-state species with long lifetimes. Metastable species are produced, for example, in corona or glow electrical discharges. Collisions between excited-state species and ground-state species can result in ionization.

A metastable atom and molecule source is described in U.S. Patents No. 6, 949, 741 and No. 7, 112, 785. The source has come to be known commercially as DART®. By directing the metastable species from the DART® source at analytes, they can be ionized and analyzed with a mass spectrometer or the like. A similar Microplasma-Lased System is described in US 2009/012427 A1.

Exposure of a surface to a heated gas stream containing excited-state atoms or molecules is not sufficient to vaporize or desorb metals or most inorganic elements. The same is true for spray desorption methods, although the addition of strong acids or bases to the solvent spray may allow the dissolution of some elements. However, by treating the surface with a chelating reagent, inorganic elements can be made volatile and desorbed directly from the surface. Alternatively, by wiping or swabbing a surface that has been exposed to a chelating reagent, material may be removed that can be analyzed later directly on the swab or the material can be deposited on another sampling device for further analysis. The reagent can be applied to the surface before the wipe, or the wipe may be wetted with the reagent prior to swabbing the surface.

In U.S. Patent No.5 ,705,443, plasma assisted etching of metal containing layers is enhanced by treating the surface with a metal chelant, eg. hexafluoroacetylacetone, HFAC, but the process is carried out under high vacuum. Moreover, it is also known to remove metal species from solution or biological serum through a direct chelation reaction with fluorinated β-diketones, as taught in ANALYTICAL CHEMISTRY, vol. 53, no. 2, February 1981, pp. 249-253. Also, the use of sampling swabs in surface analysis is disclosed in US 2005/0288616 A1.

Acetyl acetone ("ACAC") is a well-known chelating agent for transition metals. A preferred reagent for sampling inorganic species by ambient ionization is a water/methanol solution of acetyl acetone into which a base, such as ammonia or sodium hydroxide, has been added to form the acetyl acetonate anion. Other solvents, such as acetonitrile, may be substituted. Other ligands or chelating agents including ammonia, ethylenediamine, ethylenediamine tetraacetic acid (EDTA), and hexafluoroacetyl acetone can also be used with varying efficiencies.

For DART@ analysis, helium DART@ gas was used with the gas heater set to 350°C. The time-of-flight mass spectrometer (AccuTOF®-DART® available from JEOL USA, Inc.) was operated at a resolving power of 6,000 (FWHM definition) defined at m/z 609 (MH+ from reserpine) and with the following atmospheric pressure interface potentials: orifice 1 = 200V, orifice 2 = 15V, ring lens potential = 10V. These potentials were suitable to fragment the elemental complexes to simpler elemental ions or their oxides and hydroxides. At more typical potentials (orifice 1 = 20V, orifice 2 = 5V, ring lens = 5V), ions corresponding to the chelate complexes could be observed, such as Cu(ACAC)+ or Al(ACAC)2 +.

Other ambient ionization configurations can be envisioned. The chelating agent can also be added to a solution used for spray desorption, such as desorption electrospray ionization (DESI) or desorption sonic-spray ionization.

The desorbed complex may be detected intact, or collisionally fragmented or photofragmented to produce small elemental ions and/or their oxides and hydroxides. The latter approach is convenient because the small elemental ions can be readily separated from interferences by using high-resolution mass spectrometry and recognized by their exact masses. Tandem mass spectrometry may also be used to recognize elements by relating precursor complexes and their corresponding elemental fragment ions.

The method has been shown to be successful for the analysis of the following elements for which samples or materials containing those elements were available in our laboratory: Na, K, Rb, Cs, Al, Cr, Mn, Fe, Co, Ni, Cu, Zn, As, Ag, Cd, In, Sn, Sb, Hg, Tl, Pb, Bi, Gd, and U. Therefore, it is feasible to conveniently detect toxic metals, such as Cd, Pb, and Hg, and to determine the presence of common metals, such as Pb and Sn in solder traces on PC boards, to determine the presence of common metals, such as Co, Cu, Ni, and Fe, in materials, such as magnets, and to detect materials of strategic interest, such as U.

Several other elements are expected to work but were not readily available to test, such as Pt, Rh, Ru, and V. Relatively unreactive elements, such as Au, W, Mo and the group II elements (Be, Ca, Mg, Sr, Ba), have not been detected by this method at present. Other elements, such as C, H, N, O, S, Si, Se, Te, F, Cl, Br, and I, have been readily detected as pure elements or inorganic compounds and do not require this method for detection. The method is not suitable for detecting the noble gases.

Adding a chelating agent (an acetyl acetonate solution) together with a metal (e.g. Na, K, or Ag) and a substrate analyte (e.g. polyethylene glycol) can result in the formation of adducts, such as [M+Na]+, [M+K]+ AND [M+Ag]+. Although such adducts are commonly observed by electrospray ionization and DESI and related techniques, such adducts have not been previously observed by DART@ or related gas phase ionization techniques. This provides a convenient means for forming ionic complexes that may be of chemical interest.

### Example 1

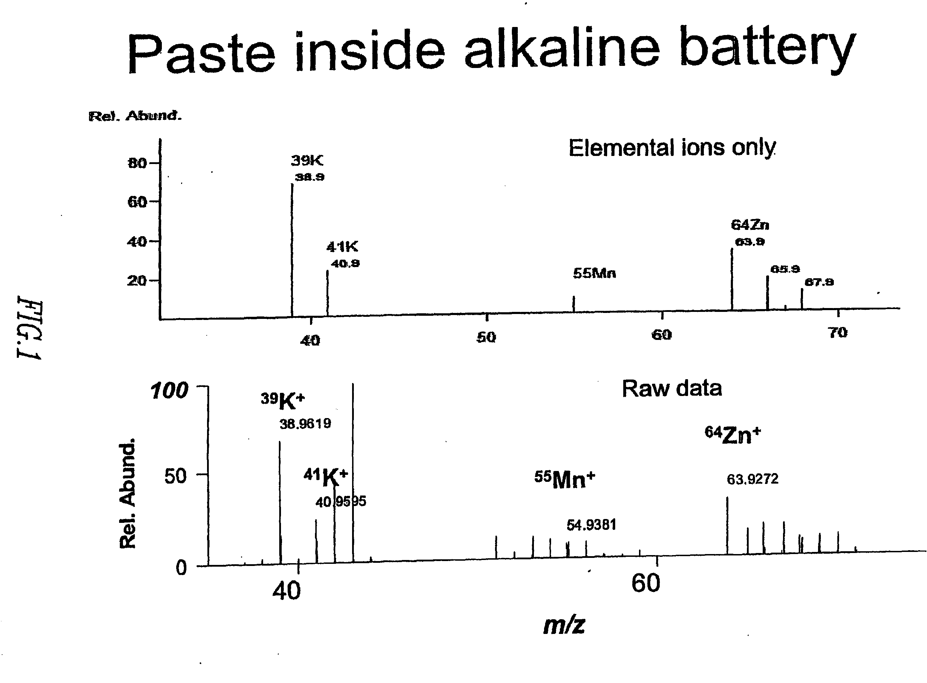

The paste inside an alkaline battery was treated with a chelating agent and then exposed to a flow of metastable atoms and molecules at atmospheric pressure to ionize volatile compounds. The ionized volatile compounds were passed to a mass spectrometer. The raw mass spectrum and elements only mass spectrum are shown in Fig. 1.

### Example 2

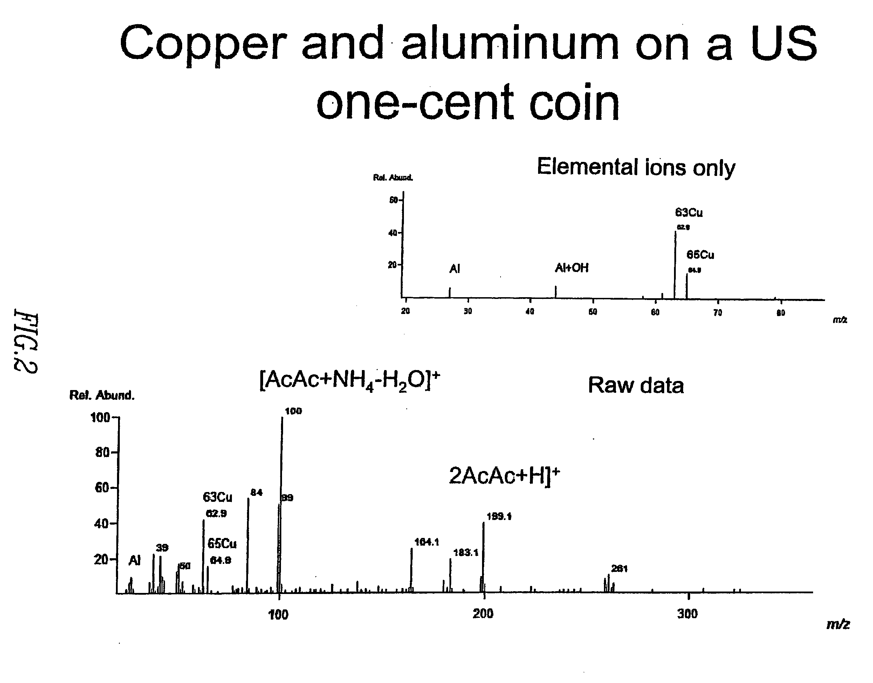

The surface of a one cent U.S. coin was treated with a chelating agent and exposed to a flow of metastable atoms and molecules at atmospheric pressure to ionize volatile compounds. The ionized volatile compounds were passed to a mass spectrometer. The raw mass spectrum and elements only mass spectrum are shown in Fig. 2.

### Example 3

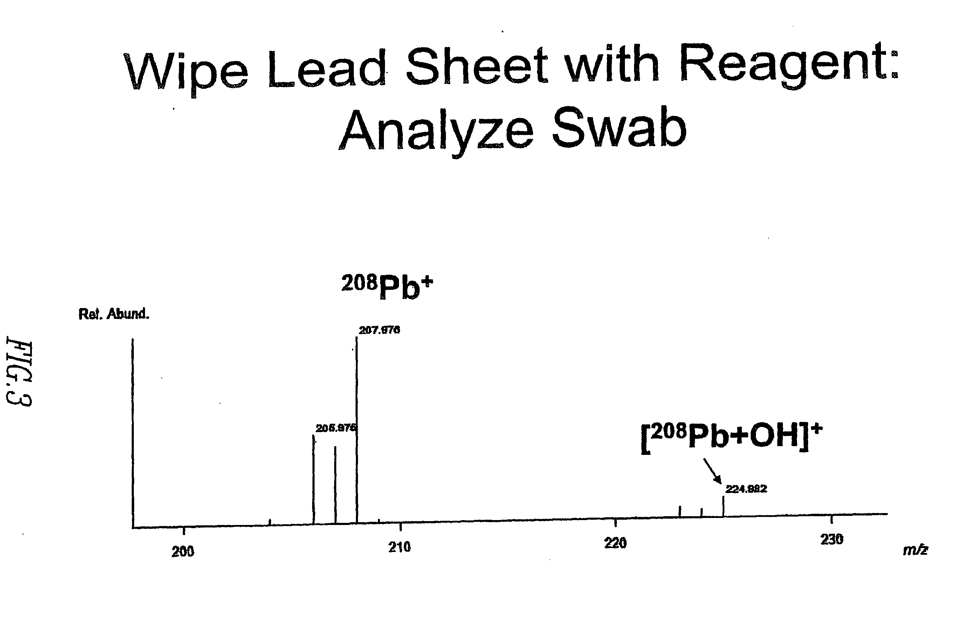

The surface of a lead sheet was treated with a chelating agent and brushed with a swab. The swab was exposed to a flow of metastable atoms and molecules at atmospheric pressure to ionize volatile compounds. The ionized volatile compounds were passed to a mass spectrometer. The raw mass spectrum and elements only mass spectrum are shown in Fig. 3.

Having thus defined my invention in the detail and particularity required by the Patent Laws, what is desired protected by Letters Patent is set forth in the following claims.

## Claims

1. A method of inorganic analysis by mass spectrometry comprising treating a surface with a chelating reagent so that inorganic elements can be made volatile and desorbed directly from the surface, exposing the volume over the surface to a flow of metastable atoms and molecules at atmospheric pressure to ionize volatile compounds, and passing the ionized volatile compounds to a mass spectrometer or the like.

2. A method of inorganic analysis by mass spectrometry comprising treating a surface with a chelating reagent so that inorganic elements can be made volatile and desorbed directly from the surface, swabbing the surface after exposure to a chelating reagent, exposing the swab to a flow of metastable atoms and molecules at atmospheric pressure to ionize volatile compounds, and passing the ionized volatile compounds to a mass spectrometer or the like.

3. The method according to claim 1 or 2, wherein the chelating reagent comprises a solvent, water, methanol, and a base.

4. The method according to any of claims 1, 2 or 3, wherein the solvent is acetyl acetone or acetonitrile.

5. The method according to any of claims 1-4, wherein the base is ammonia or sodium hydroxide.

6. The method according to any of claims 1-5, further comprising collisionally fragmenting or photofragmenting the desorbed inorganic elements.

7. The method according to any of claims 1-6, further comprising forming an adduct by adding a metal and a substrate analyte to the chelating reagent.

8. The method according to claim 7, wherein the metal is Na, K or Ag.

9. The method according to claim 7 or 8, wherein the substrate analyte is polyethylene glycol.

10. The method according to any of claims 2-9, wherein the chelating reagent is applied to the surface before wiping.

11. The method according to any of claims 2-10, wherein the chelating reagent is applied to the swab before wiping.

## Patentansprüche

1. Ein Verfahren für die anorganische Analyse mittels Massenspektrometrie, umfassend: Behandeln einer Fläche mit einem chelatbildenden Reagens, so dass anorganische Elemente direkt von der Fläche verflüchtigt und desorbiert werden können, Aussetzen des Volumens über der Fläche einem Strom von metastabilen Atomen und Molekülen bei atmosphärischem Druck, um flüchtige Verbindungen zu ionisieren, und Einbringen der ionisierten flüchtigen Verbindungen in ein Massenspektrometer oder dergleichen.

2. Ein Verfahren für die anorganische Analyse mittels Massenspektrometrie, umfassend: Behandeln einer Fläche mit einem chelatbildenden Reagens, so dass anorganische Elemente direkt von der Fläche verflüchtigt und desorbiert werden können, Abtupfen der Fläche, nachdem sie einem chelatbildenden Reagens ausgesetzt wurde, Aussetzen des Tupfers einem Strom von metastabilen Atomen und Molekülen bei atmosphärischem Druck, um volatile Verbindungen zu ionisieren, und Einbringen der ionisierten flüchtigen Verbindungen in ein Massenspektrometer oder dergleichen.

3. Das Verfahren gemäß Anspruch 1 oder 2, wobei das chelatbildende Reagens ein Lösungsmittel, Wasser, Methanol und eine Base enthält.

4. Das Verfahren gemäß einem der Ansprüche 1, 2 oder 3, wobei das Lösungsmittel Acetylaceton oder Acetonitril ist.

5. Das Verfahren gemäß einem der Ansprüche 1 bis 4, wobei die Base Ammoniak oder Natriumhydroxid ist.

6. Das Verfahren gemäß einem der Ansprüche 1 bis 5, ferner umfassend das kollisionsinduzierte Fragmentieren oder Photofragmentieren der desorbierten anorganischen Elemente.

7. Das Verfahren gemäß einem der Ansprüche 1 bis 6, ferner umfassend das Bilden eines Adduktes durch Hinzufügen eines Metalls und eines Substratanalyten zu dem chelatbildenden Reagens.

8. Das Verfahren gemäß Anspruch 7, wobei das Metall Na, K oder Ag ist.

9. Das Verfahren gemäß Anspruch 7 oder 8, wobei der Substratanalyt Polyethylenglycol ist.

10. Das Verfahren gemäß einem der Ansprüche 2 bis 9, wobei das chelatbildende Reagens vor dem Abwischen auf die Fläche aufgebracht wird.

11. Das Verfahren gemäß einem der Ansprüche 2 bis 10, wobei das chelatbildende Reagens vor dem Abwischen auf den Tupfer aufgebracht wird.

## Revendications

1. Procédé d'analyse inorganique par spectrométrie de masse comprenant le traitement d'une surface avec un réactif chélateur de sorte que les éléments inorganiques puissent être rendus volatils et soient désorbés directement de la surface, l'exposition du volume au-dessus de la surface à un flux d'atomes et de molécules métastables à pression atmosphérique pour ioniser les composés volatils, et le passage des composés volatils ionisés au spectromètre de masse ou similaire.

2. Procédé d'analyse inorganique par spectrométrie de masse comprenant le traitement d'une surface avec un réactif chélateur de sorte que les éléments inorganiques puissent être rendus volatils et soient désorbés directement de la surface, le tamponnage de la surface après exposition à un réactif chélateur, exposer le tampon à un flux d'atomes et de molécules métastables à pression atmosphérique pour ioniser les composés volatils, et le passage des composés volatils ionisés au spectromètre de masse ou similaire.

3. Procédé selon la revendication 1 ou 2, dans lequel le réactif chélateur comprend un solvant, de l'eau, du méthanol et une base.

4. Procédé selon l'une quelconque des revendications 1, 2 ou 3, dans lequel le solvant est l'acétylacétone ou l'acétonitrile.

5. Procédé selon l'une quelconque des revendications 1 à 4, dans lequel la base est l'ammoniac ou l'hydroxyde de sodium.

6. Procédé selon l'une quelconque des revendications 1 à 5, comprenant en outre la fragmentation par collision ou la photo-fragmentation des éléments inorganiques désorbés.

7. Procédé selon l'une quelconque des revendications 1 à 6, comprenant en outre la formation d'un produit d'addition en ajoutant un métal et un analyte substrat au réactif chélateur.

8. Procédé selon la revendication 7, dans lequel le métal est Na, K ou Ag.

9. Procédé selon la revendication 7 ou 8, dans lequel l'analyte substrat est le polyéthylène glycol.

10. Procédé selon l'une quelconque des revendications 2 à 9, dans lequel le réactif chélateur est appliqué à la surface avant l'essuyage.

11. Procédé selon l'une quelconque des revendications 2 à 10, dans lequel le réactif chélateur est appliqué au tampon avant l'essuyage.
